(19) Europäisches Patentamt
European Patent Office
Office européen des brevets

(11) Veröffentlichungsnummer: **0 230 547**
**A2**

(12) **EUROPÄISCHE PATENTANMELDUNG**

(21) Anmeldenummer: **86116273.3**

(22) Anmeldetag: **24.11.86**

(51) Int. Cl.⁴: **C08G 73/14**, C08G 73/16, C09K 19/38

(30) Priorität: **04.12.85 DE 3542796**

(43) Veröffentlichungstag der Anmeldung: **05.08.87 Patentblatt 87/32**

(84) Benannte Vertragsstaaten: **AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Hisgen, Bernd, Dr.**
**Goethestrasse 6**
**D-6703 Limburgerhof(DE)**
Erfinder: **Portugall, Michael, Dr.**
**Raiffeienstrasse 7**
**D-6706 Wachenheim(DE)**
Erfinder: **Steinbergerm Rolf, Dr.**
**Am Moenchhof 47**
**D-6707 Schifferstadt(DE)**

(54) **Vollaromatische mesomorphe Polyesteramidimide, deren Herstellung und Verwendung.**

(57) Vollaromatische mesomorphe Polyesteramidimide, die unterhalb 320°C eine flüssigkristalline fadenbildende Schmelze bilden, aufgebaut aus

a) 5 bis 35 Mol.% wiederkehrenden Einheiten der Formel I und/oder II

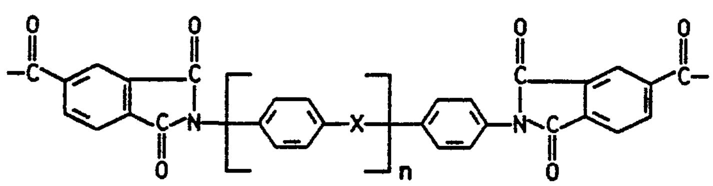

I

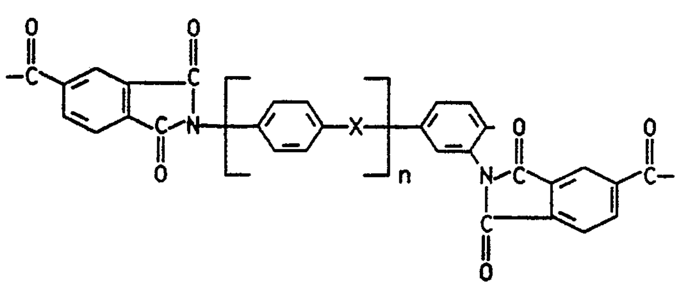

II

wobei in den Formeln I und II X jeweils gleich oder verschieden sein kann und -O-, -S-, $-SO_2-$, -CO-, $-CH_2-$ oder $=C(CH_3)_2$ bedeutet und n für 0 oder 1 steht,

b) 0 bis 30 Mol.% wiederkehrenden Einheiten der Formeln III und/oder IV

EP 0 230 547 A2

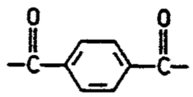

III

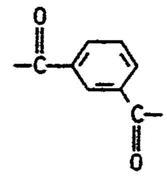

IV

c) einer der Summe der Komponenten a) und b) entsprechenden molaren Menge mindestens einer der wiederkehrenden Einheiten der Formeln V bis IX

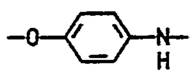

V

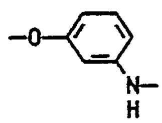

VI

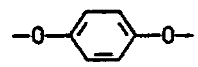

VII

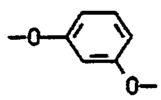

VIII

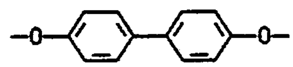

IX

d) gegebenenfalls 5 bis 25 Mol.% mindestens einer der wiederkehrenden Einheiten der Formeln X bis XII

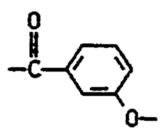

X

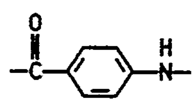

XI

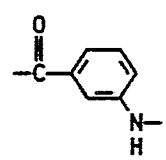

XII

e) wiederkehrenden Einheiten der Formel XIII

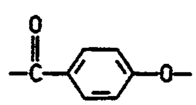

XIII

wobei sich die Summe der Molprozente aus den Komponenten a) bis e) jeweils zu 100 Mol.% ergibt, deren Herstellung und Verwendung.

## Vollaromatische mesomorphe Polyesteramidimide, deren Herstellung und Verwendung

Gegenstand der Erfindung sind vollaromatische mesomorphe Polyesteramidimide, die unterhalb 320°C eine flüssigkristalline fadenbildende Schmelze bilden.

Es sind schon eine Reihe von flüssigkristallinen Polyesteramiden und Polyesterimiden bekannt. Solche Polymere sind jedoch hinsichtlich ihrer Wärmeformbeständigkeit, ihrer Verarbeitbarkeit und insbesondere im Hinblick auf ihre geringe Abriebfestigkeit verbesserungsbedürftig. Aus der EP-Anmeldung 81 900 sind Polyesteramide bekannt, die zumindestens zu 40 % aus coaxialen Einheiten wie aromatischen Dicarbonsäuren, Hydroxibenzolcarbonsäuren, Bisphenolen und Aminophenolen aufgebaut sind und eine ausreichende Menge an nicht-linearen Resten enthalten, die sich von aromatischen m-Aminoverbindungen oder 2-kernigen aromatischen Sulfonen ableiten. Es wird jedoch kein Hinweis gegeben, welche Zusammensetzung erforderlich ist, um die geforderte Eigenschaftskombination zu erzielen. In der US-PS 4 176 223 werden Polyesterimide beschrieben, die aus Naphthalindicarbonsäure, substituierten Hydrochinonen sowie 4-(4'-Carboxyphthalimido)-benzoesäure aufgebaut sind. Solche Polymere erfordern jedoch für ihre Verarbeitung aus der Schmelze Temperaturen von 330°C und mehr. Das gleiche gilt für die aus der US-PS 4 383 105 bekannten Polyesterimide, die aus Hydroxinaphthalincarbonsäure, Terephthalsäure, p-Hydroxibenzoesäure sowie 4-(4'-Hydroxiphthalimido)-phenol aufgebaut sind.

Es war deshalb die technische Aufgabe gestellt, vollaromatische mesomorphe Polyesteramidimide zur Verfügung zu stellen, die unterhalb 320°C eine flüssigkristalline fadenbildende Schmelze zeigen und sich somit leicht verarbeiten lassen und darüber hinaus eine hohe Wärmeformbeständigkeit, eine gute Abriebfestigkeit sowie eine gute Zähigkeit aufweisen.

Diese Aufgabe wird gelöst durch vollaromatische mesomorphe Polyesteramidimide die unterhalb 320°C eine flüssigkristalline fadenbildende Schmelze bilden, aufgebaut aus

a) 5 bis 35 Mol.% wiederkehrenden Einheiten der Formel I und/oder II

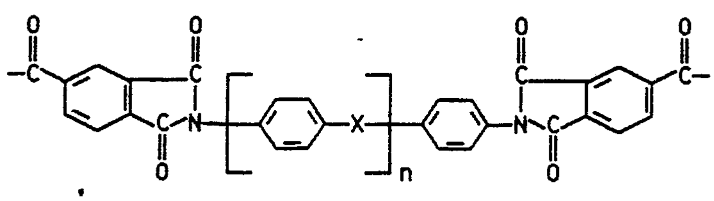

I

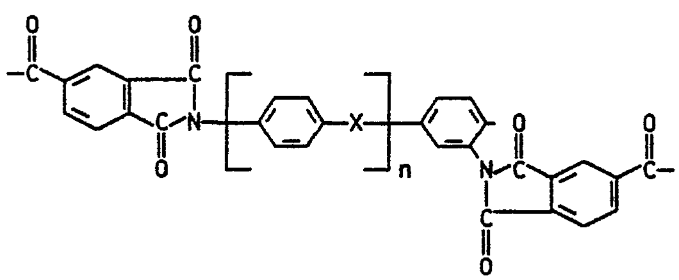

II

wobei in den Formeln I und II X gleich oder verschieden sein kann und jeweils für -O-, -S-, $-SO_2-$, -CO-, $-CH_2-$oder $-C(CH_3)_2$ steht und n 0 oder 1 bezeichnet.

b) 0 bis 30 Mol.% wiederkehrenden Einheiten der Formeln III und/oder IV

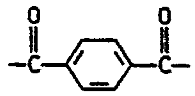

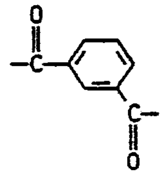

III IV

c) einer der Summe der Komponenten a und b entsprechenden molaren Menge mindestens einer der wiederkehrenden Einheiten der Formeln V bis IX

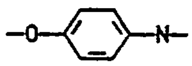

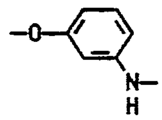

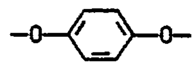

V VI VII

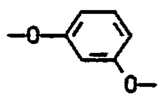

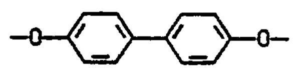

VIII IX

d) gegebenenfalls 5 bis 25 Mol.% mindestens einer der wiederkehrenden Einheiten der Formeln X bis XII

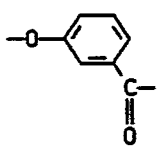

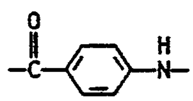

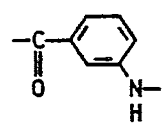

X XI XII

e) wiederkehrenden Einheiten der Formel XIII

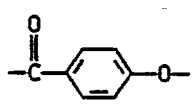

XIII

wobei sich die Summe der Molprozente aus den Komponenten a) bis e) jeweils zu 100 Mol.% ergibt.

Die neuen vollaromatischen Polyesteramidimide haben den Vorteil, eine hohe Wärmeformbeständigkeit mit einer glatten abriebfesten Oberfläche zu verbinden. Weiterhin zeichnen sich die neuen Polyesteramidimide durch hohe Steifigkeit, Festigkeit und Zähigkeit aus. Zudem sind die neuen Polyesteramidimide weitgehend chemikalienbeständig und schwer brennbar. Darüber hinaus lassen sich die neuen Polyesteramidimide bei einer Temperatur unter 320°C aus der Schmelze verarbeiten.

Der flüssigkristalline Zustand der Polyesteramidimide kann mit dem Polarisationsmikroskop nach einer in der DE-AS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Die erfindungsgemäßen Polyesteramidimide sind aufgebaut aus

a) 5 bis 35 Mol.%, insbesondere 7 bis 25 Mol.% wiederkehrenden Einheiten der Formeln I und/oder II

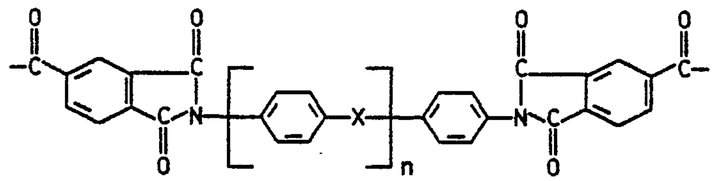

I

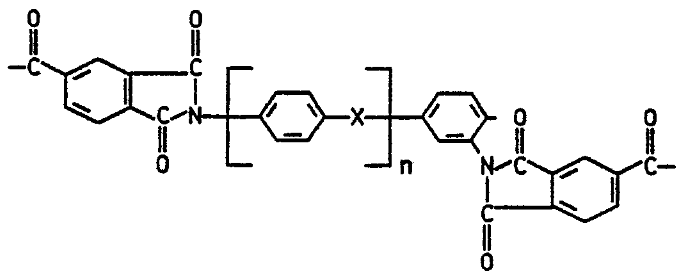

II

wobei in den Formeln I und II X jeweils gleich oder verschieden sein kann und -O-, -S-, $-SO_2-$, -CO-, $-CH_2-$ oder $=C(CH_3)_2$ insbesondere -O-,$-SO_2-$, $-CH_2-$bezeichnet und n für 0 oder 1 steht.

Geeignete Verbindungen sind beispielsweise 4,4'-Bis-[(4-carboxy)-N-phthalimido] diphenylether, 4,4'-Bis-[-(4-carboxy)-N-phthalimido]diphenylmethan, 4,4'-Bis-[(4-carboxy)-N-phthalimido]diphenylsulfon, 4,4'-Bis-[(4-carboxy)-N-phthalimido]diphenylsulfid, 4,4'-Bis-[(4-carboxy)-N-phthalimido]diphenylketon, 3,4'-Bis-[(4-carboxy)-N-phthalimido]diphenylether, 3,4'-Bis-[(4-carboxy)-N-phthalimido]diphenylsulfid, 3,4'-Bis-[(4-carboxy)-N-phthalimido]diphenylsulfon, 3,4'-Bis-[(4-carboxy)-N-phthalimido]diphenylketon und 3,4'-Bis-[(4-carboxy)-N-phthalimdio]diphenylmethan.

Verbindungen der Formel I und II sind beispielsweise erhältlich nach Polym Sci. (A-1), 7 ,k 32-332 (1969)

b) 0 bis 30 Mol.%, insbesondere 0 bis 20 Mol.% wiederkehrenden Einheiten der Formeln III und/oder IV

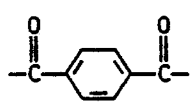

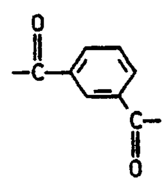

III IV

geeignete Ausgangsverbindungen sind beispielsweise Terephthalsäure und Isophthalsäure

c) einer Summe der Komponenten a) und b) entsprechenden molaren Menge mindestens einer der wiederkehrenden Einheiten der Formeln V bis IX

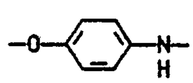

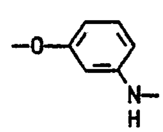

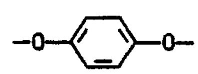

V VI VII

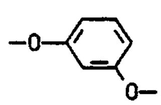

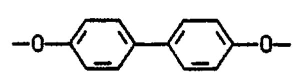

VIII IX

Geeignete Ausgangsstoffe sind beispielsweise p-Aminophenol für Einheiten der Formel V, m-Aminophenol für Einheiten der Formel VI, Hydrochinon für Einheiten der Formel VII, Resorcin für Einheiten der Formel VIII und 4,4'-Dihydroxibiphenyl für Einheiten der Formel IX

d) gegebenenfalls 5 bis 25 Mol.%, insbesondere 5 bis 20 Mol.% mindestens einer der wiederkehrenden Einheiten der Formeln X bis XII

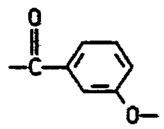
X

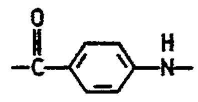
XI

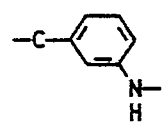
XII

Geeignete Ausgangsstoffe sind beispielsweise m-Hydroxibenzoesäure für Einheiten der Formel X, p-Aminobenzoesäure für Einheiten der Formel XI und m-Aminobenzoesäure für Einheiten der Formel XII

e) wiederkehrenden Einheiten, insbesondere in einer Menge von mindestens 10 Mol.%, der Formel XIII

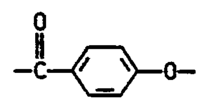
XIII

Eine geeignete Ausgangsverbindung ist beispielsweise p-Hydroxibenzoesäure.
Es versteht sich, daß sich die Summe der Molprozente aus der Komponenten a) bis e) jeweils 100 Mol.% ergibt.-

Vorteilhaft enthalten die erfindungsgemäßen Polyesteramidimide als Komponente c) 5 bis 20 Mol.% wiederkehrende Einheiten der Formel VI und/oder 2 bis 8 Mol.% wiederkehrende Einheiten der Formel V und/oder 5 bis 20 Mol.% mindestens eine der wiederkehrenden Einheiten der Formel VII, VIII oder IX.

Besonders bevorzugt sind Polyesteramidimide, die als Komponente c) 5 bis 20 Mol.% wiederkehrende Einheiten der Formel VI sowie 5 bis 15 Mol.% wiederkehrende Einheiten der Formel VII und 5 bis 15 Mol.% wiederkehrende Einheiten der Formel IX aufweisen.

Andere bevorzugte Polyesteramidimide enthalten als Komponente c) 5 bis 20 Mol.% wiederkehrende Einheiten der Formel VI und 5 bis 15 Mol.% wiederkehrende Einheiten der Formel VII.

Bevorzugte vollaromatische Polyesteramidimide gemäß der Erfindung haben eine Glastemperatur von ≥140°C, insbesondere ≥150°C. Die Glastemperatur soll dabei gemessen werden mit der DSC-Methode, wie sie beschrieben ist von K.H. Illers und anderen in Makromol. Chemie, Band 127 (1969), Seiten 1 ff. Die vollaromatischen flüssigkristallinen Polyesteramidimide entsprechend der Erfindung bilden bei einer Temperatur <320°C eine flüssigkristalline fadenbildende Schmelze. Bevorzugt sind auch flüssigkristalline aromatische Polyetheresteramide, die bei einer Temperatur >200°C und <300°C Teilkristallinität aufweisen.

Die erfindungsgemäßen flüssigkristallinen Polyesteramidimide lassen sich erhalten analog einer Reihe von Techniken, wie sie beispielsweise in der US-PS 4 375 530 und US-PS 41 18 372 beschrieben werden.

Nach einer vorteilhaften Arbeitsweise erhält man die erfindungsgemäßen Polyesteramidimide in einem Einstufen-Verfahren, bei dem man die Ausgangsstoffe als nicht derivatisierte Carbonsäuren, Hydroxiverbindungen oder Aminoverbindungen unter Verwendung von Anhydriden niederer Fettsäuren, z.B. Fettsäuren mit 2 bis 4 Kohlenstoffatomen, insbesondere Essigsäureanhydrid umsetzt. Es ist auch möglich, Katalysatoren wie sie beispielsweise in der EP-A-131 846, S. 9 beschrieben sind in einer Menge von 0,001 bis 1 Gew.% mitzuverwenden. Bei der bevorzugten Arbeitsweise werden die Ausgangsstoffe zusammen mit Fettsäureanhydrid, vorteilhaft in einem mindestens 5 %igen molaren Überschuß, bezogen auf die vorhandenen Hydroxi-und Aminogruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden, auf 130 bis 200°C, anschließend wird die Temperatur z.B. innerhalb 2 bis 2 1/2 Stunden auf 250 bis 350°C gesteigert. Hierbei werden überschüsige Fettsäureanhydride und Fettsäuren abdestilliert. Um die Reaktion zu vervollständigen, hat es sich als vorteilhaft erwiesen, gegen Ende verminderten Druck, z.B. von 200 bis 0,1 mbar anzuwenden.

Die so erhaltenen vollaromatischen flüssigkristallinen Polyesteramidimide können anschließend in festem Zustand, z.B. bei Temperaturen von 150 bis 250°C in fester Phase unterhalb ihres Schmelzpunktes bis zur gewünschten Viskosität weiter-kondensiert werden. Diese Nachkondensation in fester Phase kann sowohl vor als auch nach einer thermoplastischen Verarbeitung erfolgen. Vorteilhaft führt man die Kondensation in fester Phase unter Mitverwendung von Inertgasen, z.B. Stickstoff durch.
bemerkenswert und nicht vorherzusehen bei der Anwendung dieses Einstufen-Verfahrens ist zunächst die problemlose und vollständige Reaktion ohne Katalysatorzusatz zu den gewünschten Polymeren in einer relativ kurzen Zeit. Dies ist umso bemerkenswerter, als durch die Vielzahl chemisch unterschiedlicher Hydroxi-und Aminogruppen eine Abstufung der Reaktivitäten und damit ein mangelhafter polymerer Aufbau zu erwarten wäre.

Die Polyesteramidimide gemäß der Erfindung können übliche Zusatzstoffe wie Stabilisatoren, Oxidationsverzögerer, Mittel gegen Wärmezersetzung und Zersetzung durch ultraviolettes Licht, Gleit-und Entformungsmittel, Färbemittel wie Farbstoffe und Pigmente, faser-und pulverförmige Füllstoffe und Verstärkungsmittel, Weichmacher und Keimbildungsmittel in üblichen wirksamen Mengen enthalten.

Die Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Geeignete Oxidationsverzögerer und Wärmestabilisatoren sind beispielsweise Halogenide von Metallen der Gruppe I des periodischen Systems, z.B. von Natrium, Kalium, Lithium mit Kupfer-I-halogeniden, z.B. Chlorid, Bromid oder Iodid. Ferner sterisch gehinderte Phenole, Hydrochinone, verschiedene substituierte Vertreter dieser Gruppen und Kombinationen derselben und Konzentrationen bis zu 1 Gew.%, bezogen auf das Polymere.

Geeignete UV-Stabilisatoren, die in Mengen bis zu 2 Gew.%, bezogen auf die Masse angewandt werden, sind beispielsweise substituierte Resorcine, Salicylate, Benzotriazole oder Benzophenone.

Weitere Zusatzmittel sind z.B. organische Farbstoffe wie Nigrosin oder Pigmente wie Titandioxid, Cadmiumsulfid, -selenid, Phthalocyanine, Ultramarinblau oder Ruß, die z.B. in Mengen bis etwa 5 Gew.%, bezogen auf das Polymere angewandt werden.

Weiterhin sind geeignete Zusatzmittel faser-oder pulverförmige Füll-und Verstärkungsmittel wie Kohlenstoff-Fasern, Glasfasern, amorphe Kieselsäure, Asbest, Kalziumsilikat, Aluminiumsilikat, Magnesiumcarbonat, Kaolin, Feldspat, Kreide, gepulverter Quarz, Glimmer, z.B. in Mengen bis zu 70 Gew.% des Polymeren.

Andere geeignete Zusatzstoffe sind Keimbildungsmittel wie Talkum, Kalziumfluorid, Natriumphenylphosphinat, Aluminiumoxid oder fein verteiltes Polytetrafluorethylen.

Geeignete Zusatzmittel sind auch Weichmacher z.B. in Mengen bis zu 20 Gew.% des Polymeren, z.B. Phthalsäuredioctylester, Phthalsäuredibenzylester, Phthalsäurebutylbenzylester, Kohlenwasserstofföle, N-n-Butylbenzolsulfonamid, o-und p-Toluolethylsulfonamid.

Die erfindungsgemäßen vollaromatischen flüssigkristallinen Polyesteramidimide eignen sich zur Herstellung von Fäden, Fasern, Folien, Schäumen und technischen Formteilen durch Spritzguß, Pressen oder Extrusion. Die aus den erfindungsgemäßen Polyesteramidimiden hergestellten Formteile zeichnen sich durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte, abriebfeste Oberfläche. Die erfindungsgemäßen Polyesteramidimide eignen sich daher hervorragend zur Herstellung von Artikeln für die Elektro-und Datentechnik, den Fahrzeugbau und andere technische Bereiche. Sie können aber auch als Überzugs-und Beschichtungsmaterial, z.B. pulverförmig dispergiert oder als Film eingesetzt werden.

Die Erfindung sei an folgenden Beispielen veranschaulicht.

Beispiel 1

0,15 mol Terephthalsäure, 0,26 mol 4-Hydroxibenzoesäure, 0,07 mol Hydrochinon, 0,07 mol Dihydroxibiphenyl, 0,06 mol 3-Aminophenol und 0,05 mol der Verbindung

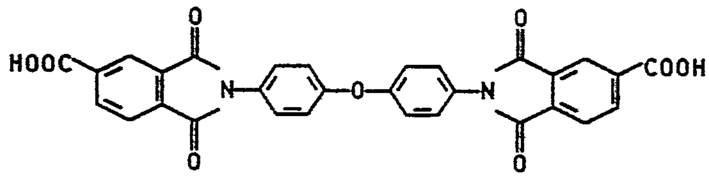

und 84 ml Acetanhydrid werden unter Stickstoffatmosphäre und Rühren innerhalb von 3 h von 150°C auf 300°C erhitzt. Dabei wird überschüssiges Acetanhydrid und Essigsäure abdestilliert. Anschließend wird innerhalb 1 h 15 min der Druck auf 240 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastem peratur von 150°C und eine Schmelztemperatur von 260°C. Die inhärente Viskosität beträgt 1,00 dl/g, gemessen in 0,1 %iger (Gew/Vol) Lösung in Pentafluorphenol bei 60°C.

Beispiel 2

0,10 mol Terephthalsäure, 0,26 mol 4-Hydroxibenzoesäure, 0,07 mol Hydrochinon, 0,03 mol Dihydroxibiphenyl, 0,10 mol 3-Aminophenol und 0,1 mol der Verbindung

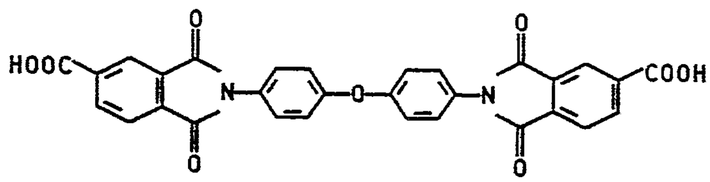

und 84 ml Acetanhydrid werden unter Stickstoffatmosphäre und Rühren innerhalb von 2 h 45 min von 150°C auf 300°C erhitzt. Dabei wird überschüssiges Acetanhydrid und Essigsäure abdestilliert. Anschließend wird innerhalb 50 min der Druck auf 80 mbar reduziert. Man erhält eine viskose, helle, fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 177°C. Die inhärente Viskosität beträgt 0,82 dl/g, gemessen in 0,1 %iger - (Gew/Vol) Lösung in Pentafluorphenol bei 60°C.

Beispiel 3

0,085 mol Terephthalsäure, 0,22 mol 4-Hydroxibenzoesäure, 0,085 mol Hydrochinon, 0,085 mol 3-Aminophenol und 0,085 mol der Verbindung

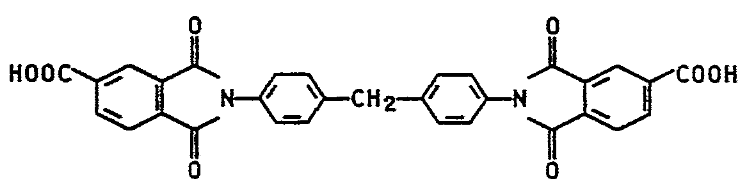

und 96 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 20 min der Druck auf 40 mbar reduziert. Man erhält eine viskose fadenbildende Schmelze. Die Polymerschmelze und das erkaltete Polymer zeigen einen perlmuttartigen Glanz. Das Polymer besitzt eine glatte, har te und abriebfeste Oberfläche. Aus DSC-Messungen ergibt sich eine Glastemperatur von 181°C. Die inhärente Viskosität beträgt 0,37 dl/g, gemessen in 0,5 %iger (Gew/Vol) Lösung in p-Chlorphenol bei 60°C.

**Ansprüche**

1. Vollaromatische mesomorphe Polyesteramidimide, die unterhalb 320°C eine flüssigkristalline fadenbildende Schmelze bilden, aufgebaut aus

a) 5 bis 35 Mol.% wiederkehrenden Einheiten der Formel I und/oder II

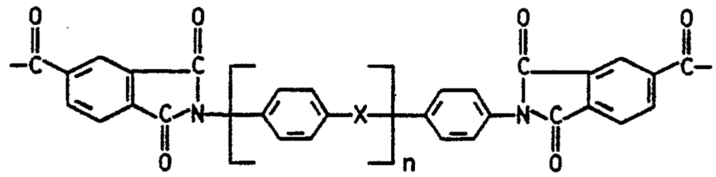

I

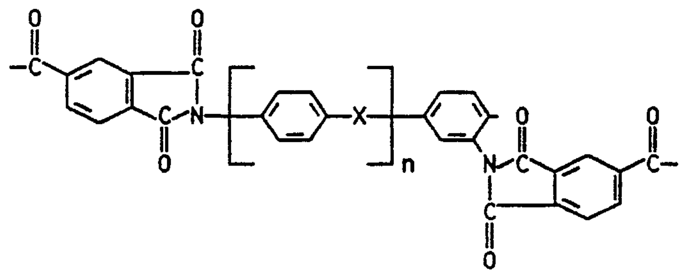

II

wobei in den Formeln I und II X jeweils gleich oder verschieden sein kann und -O-, -S-, $-SO_2-$, -CO-, $-CH_2-$ oder $-C(CH_3)_2$ bedeutet und n für 0 oder 1 steht,

b) 0 bis 30 Mol.% wiederkehrenden Einheiten der Formeln III und/oder IV

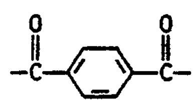

III

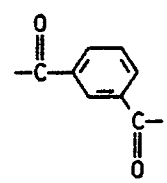

IV

c) einer der Summe der Komponenten a) und b) entsprechenden molaren Menge mindestens einer der wiederkehrenden Einheiten der Formeln V bis IX

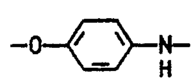

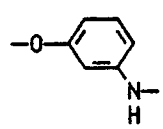

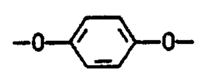

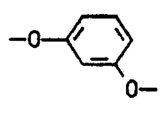

VIII

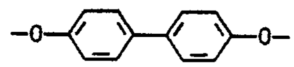

IX

d) gegebenenfalls 5 bis 25 Mol.% mindestens einer der wiederkehrenden Einheiten der Formeln X bis XII

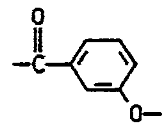 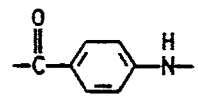 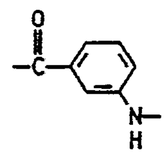

X XI XII

e) wiederkehrenden Einheiten der Formel XIII

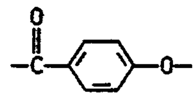

XIII

wobei die Summe der Molprozente aus den Komponenten a) bis e) jeweils 100 Mol.% ergibt.

2. Vollaromatische mesomorphe Polyesteramidimide nach Anspruch 1, dadurch gekennzeichnet, daß sie aufgebaut sind aus

a) 7 bis 25 Mol.% wiederkehrenden Einheiten der Formeln I und/oder II

b) 0 bis 20 Mol.% wiederkehrenden Einheiten der Formeln III und/oder IV

c) einer der Summe der Komponenten a) und b) entsprechenden molaren Menge an mindestens einer der wiederkehrenden Einheiten der Formeln V bis IX

d) 5 bis 20 Mol.% mindestens einer der wiederkehrenden Einheiten der Formeln X, XI oder XII

e) wiederkehrenden Einheiten der Formel XIII.

3. Vollaromatische mesomorphe Polyesteramidimide nach den Ansprüchen 1 und 2, dadurch gekennzeichnet, daß sie als Komponente C 5 bis 20 Mol.% wiederkehrende Einheiten der Formel VI und/oder 2 bis 8 Mol.% wiederkehrende Einheiten der Formel V und 5 bis 20 Mol.% mindestens einer der wiederkehrenden Einheiten der Formeln VII, VIII oder IX enthalten.

4. Vollaromatische mesomorphe Polyesteramidimide nach den Ansprüchen 1 und 2, dadurch gekennzeichnet, daß sie als Komponente c) 5 bis 20 Mol.% wiederkehrende Einheiten der Formel VI und 5 bis 15 Mol.% wiederkehrende Einheiten der Formel VII sowie 5 bis 15 Mol.% wiederkehrende Einheiten der Formel IX enthalten.

5. Vollaromatische mesomorphe Polyesteramidimide nach den Ansprüchen 1 und 2, dadurch gekennzeichnet , daß sie als Komponente c) 5 bis 20 Mol.% wiederkehrende Einheiten der Formel VI und 5 bis 15 Mol.% wiederkehrende Einheiten der Formel VII enthalten.

6. Vollaromatische mesomorphe Polyesteramidimide nach den Ansprüchen 1 bis 5, dadurch gekennzeichnet, daß sie mindestens 10 Mol.% wiederkehrende Einheiten der Formel XIII enthalten.

7. Vollaromatische mesomorphe Polyesteramidimide nach den Ansprüchen 1 bis 6, dadurch gekennzeichnet, daß sie eine Glasübergangstemperatur Tg $\geq$ 140°C haben.

8. Verfahren zur Herstellung von vollaromatischen mesomorphen Polyesteramidimiden nach den Ansprüchen 1 bis 7, dadurch gekennzeichnet, daß man die Monomeren in Form der underivatisierten Hydroxi-Amino-und -carboxy-Verbindungen in einem Einstufen-Verfahren und in den beschriebenen molaren Verhältnissen unter Zusatz von überschüssigen Fettsäureanhydrid bei erhöhter Temperatur umsetzt und Fettsäureanhydrid und Fettsäure aus dem Reaktionsgemisch abdestilliert.

9. Verfahren nach Anspruch 8, dadurch gekennzeichnet, daß man die vollaromatischen Polyesteramidimide nach der Kondensation in der Schmelze durch Kondensation in fester Phase bei einer Temperatur von 150 bis 250°C nachkondensiert.

10. Verwendung von vollaromatischen, mesomorphen Polyesteramidimiden nach den Ansprüchen 1 bis 9 zur Herstellung von Fasern, Fäden, Folien und Formteilen.

Patentansprüche für folgenden Vertragsstaat : AT

1. Verfahren zur Herstellung von vollarmatischen mesomorphen Polyesteramidimiden, die unterhalb 320°C eine flüssigkristalline fadenbildende Schmelze bilden, aufgebaut aus

a) 5 bis 35 Mol.% wiederkehrenden Einheiten der Formel I und/oder II

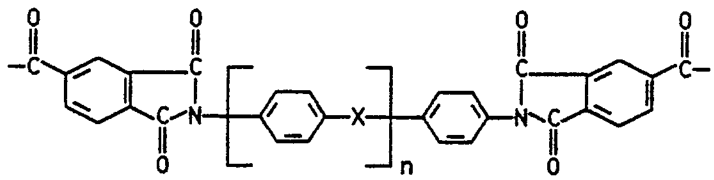

I

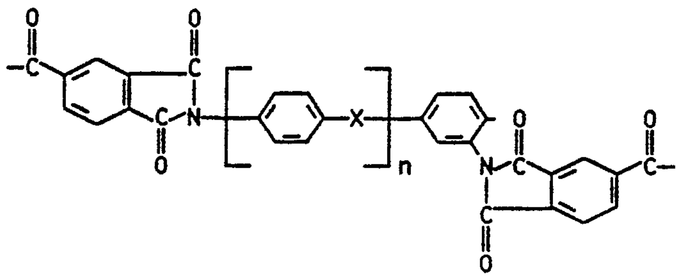

II

wobei in den Formeln I und II X jeweils gleich oder verschieden sein kann und -O-, -S-, $-SO_2-$, -CO-, $-CH_2-$ oder $-C(CHE_3)_2$ bedeutet und n für 0 oder 1 steht,

b) 0 bis 30 Mol.% wiederkehrenden Einheiten der Formeln III und/oder IV

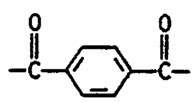

III

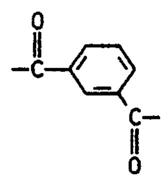

IV

c) einer der Summe der Komponenten a) und b) entsprechenden molaren Menge mindestens einer der wiederkehrenden Einheiten der Formeln V bis IX

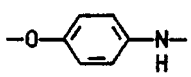

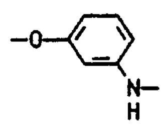

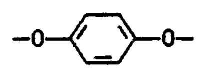

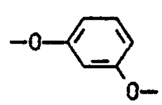

VIII

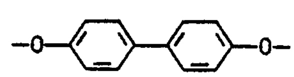

IX

d) gegebenenfalls 5 bis 25 Mol.% mindestens einer der wiederkehrenden Einheiten der Formeln X bis XII

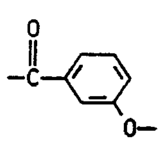

X

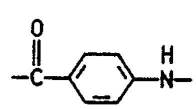

XI

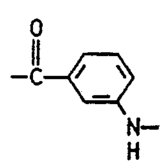

XII

e) wiederkehrenden Einheiten der Formel III

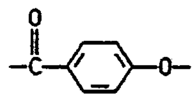

XIII

wobei die Summe der Molprozente aus den Komponenten a) bis e) jeweils 100 Mol.% ergibt, durch Umsetzen der den Einheiten I bis XIII entsprechenden Hydroxy-, Amino-und Carboxyverbindungen oder deren Ester bildenden Derivate.

2. Verfahren nach Anspruch 1, dadurch gekennzeichnet, daß vollaromatische mesomorphe Polyesteramidimide aufgebaut sind aus

a) 7 bis 25 Mo.% wiederkehrenden Einheiten der Formeln I und/oder II

b) 0 bis 20 Mol.% wiederkehrenden Einheiten der Formeln III und/oder IV

c) einer der Summe der Komponenten a) und b) entsprechenden molaren Menge an mindestens einer der wiederkehrenden Einheiten der Formeln V bis IX

d) 5 bis 20 Mol.% mindestens einer der wiederkehrenden Einheiten der Formeln X, XI oder XII

e) wiederkehrenden Einheiten der Formel XIII.

3. Verfahren nach den Ansprüchen 1 und 2, dadurch gekennzeichnet, daß die vollaromatischen mesomorphen Polyesteramidimide als Komponente C 5 bis 20 Mol.% wiederkehrende Einheiten der Formel VI und/oder 2 bis 8 Mol.% wiederkehrende Einheiten der Formel V und 5 bis 20 Mol.% mindestens einer der wiederkehrenden Einheiten der Formeln VII, VIII oder IX enthalten.

4. Verfahren nach den Ansprüchen 1 und 2, dadurch gekennzeichnet , daß die vollaromatischen mesomorphen Polyesteramidimide als Komponente c) 5 bis 20 Mol.% wiederkehrende Einheiten der Formel VI und 5 bis 15 Mol.% wiederkehrende Einheiten der Formel VI sowie 5 bis 15 Mol. % wiederkehrende Einheiten der Formel IX enthalten.

5. Verfahren nach den Ansprüchen 1 und 2, dadurch gekennzeichnet, daß die vollaromatischen mesomorphen Polyesteramidimide als Komponente c) 5 bis 20 Mol.% wiederkehrende Einheiten der Formel VI und 5 bis 15 Mol.% wiederkehrende Einheiten der Formel VII enthalten.

6. Verfahren nach den Ansprüchen 1 bis 5, dadurch gekennzeichnet, daß die vollaromatischen mesomorphen Polyesteramidimide mindestens 10 Mol.% wiederkehrende Einheiten der Formel XIII enthalten.

7. Verfahren nach den Ansprüchen 1 bis 6, dadurch gekennzeichnet, daß die vollaromatischen mesomorphen Polyesteramidimide eine Glasübergangstemperatur Tg ≥ 140°C haben.

8. Verfahren nach den Ansprüchen 1 bis 7, dadurch gekennzeichnet, daß man die Monomeren in Form der underivatisierten Hydroxi-Amino-und -carboxy-Verbindungen in einem Einstufen-Verfahren und in den beschriebenen molaren Verhältnissen unter Zusatz von überschüssigen Fettsäureanhydrid bei erhöhter Temperatur umsetzt und Fettsäureanhydrid und Fettsäure aus dem Reaktionsgemisch abdestilliert.

9. Verfahren nach den Ansprüchen 1 bis 8, dadurch gekennzeichnet , daß man die vollaromatischen Polyesteramidimide nach der Kondensation in der Schmelze durch Kondensation in fester Phase bei einer Temperatur von 150 bis 250°C nachkondensiert.

10. Verwendung von vollaromatischen, mesomorphen Polyesteramidimiden nach den Ansprüchen 1 bis 9 zur Herstellung von Fasern, Fäden, Folien und Formteilen.